(19) Europäisches Patentamt
European Patent Office
Office européen des brevets

(11) **EP 3 829 044 B1**

(12) **EUROPEAN PATENT SPECIFICATION**

(45) Date of publication and mention
of the grant of the patent:
**01.01.2025 Bulletin 2025/01**

(51) International Patent Classification (IPC):
**H02M 3/335** (2006.01)   **H05B 45/10** (2020.01)
**H05B 45/335** (2020.01)   **H05B 45/39** (2020.01)
**H02M 1/00** (2006.01)

(21) Application number: **19212414.7**

(22) Date of filing: **29.11.2019**

(52) Cooperative Patent Classification (CPC):
**H02M 3/33515; H05B 45/335; H05B 45/39;**
H02M 1/0041; H02M 1/0058; H05B 45/10;
Y02B 20/30; Y02B 70/10

(54) **MIXED T_ON - T_OFF MODULATION FOR A RESONANT CONVERTER**

GEMISCHTE T_ON-T_OFF-MODULATION FÜR EINEN RESONANZWANDLER

MODULATION MIXTE POUR UN CONVERTISSEUR RÉSONANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.06.2021 Bulletin 2021/22**

(73) Proprietor: **Tridonic GmbH & Co. KG
6851 Dornbirn (AT)**

(72) Inventor: **Mitterbacher, Andre
6850 Dornbirn (AT)**

(74) Representative: **Beder, Jens
Mitscherlich PartmbB
Patent- und Rechtsanwälte
Karlstraße 7
80333 München (DE)**

(56) References cited:
**EP-A1- 3 513 627       US-A1- 2015 016 153**

**US-A1- 2017 012 538     US-A1- 2019 313 500**

- **FENG WEIYI ET AL: "Optimal Trajectory Control
of LLC Resonant Converters for LED PWM
Dimming", IEEE TRANSACTIONS ON POWER
ELECTRONICS, INSTITUTE OF ELECTRICAL
AND ELECTRONICS ENGINEERS, USA, vol. 29,
no. 2, 1 February 2014 (2014-02-01), pages 979 -
987, XP011524645, ISSN: 0885-8993, [retrieved
on 20130820], DOI: 10.1109/TPEL.2013.2257864**
- **FEI CHAO ET AL: "Digital Implementation of
Light-Load Efficiency Improvement for High-
Frequency LLC Converters With Simplified
Optimal Trajectory Control", IEEE JOURNAL OF
EMERGING AND SELECTED TOPICS IN POWER
ELECTRONICS, IEEE, PISCATAWAY, NJ, USA,
vol. 6, no. 4, 1 December 2018 (2018-12-01),
pages 1850 - 1859, XP011693941, ISSN:
2168-6777, [retrieved on 20181030], DOI: 10.1109/
JESTPE.2018.2832135**

**Description**

The present invention relates to an operating device for lighting means comprising a switched resonant converter, a luminaire comprising such operating device and method for operating one or more lighting means by such an operating device.

Document EP 3 513 627 discloses a load control device for a light-emitting diode light source having different operating modes.

The invention relates to operating devices comprising a switched resonant converter for lighting means. The switched resonant converter of such an operating device typically comprises two switches and a power resonant circuit electrically connected to the two switches. The electrical power transferred via the power resonant circuit may be controlled by controlling switching of the two switches and, thus, a conversion of an input voltage of the switched resonant converter to an output voltage of the switched resonant converter may be controlled.

A low frequency PWM modulation using a PWM signal with a fixed frequency respectively fixed period may be carried out of a high frequency switching operation of the two switches in order to control the electrical power transferred by the switched resonant converter of such an operating device. Typically, the electrical power transferred by the switched resonant converter may be controlled by changing the duty cycle, i.e. the ratio of the on-time duration of the PWM signal with respect to the period of the PWM signal. Thus, the duty cycle is changed by increasing or decreasing the on-time duration of the PWM signal while keeping the period of the PWM signal constant at a fixed value. During the on-time duration of the PWM signal the high frequency switching operation of the two switches is performed and during the off-time duration of the PWM signal the high frequency switching operation is interrupted respectively not performed.

Therefore, by decreasing the duty cycle and, thus, the on-time duration of the PWM signal while keeping the period of the PWM signal constant at a fixed value, dimming of the light emitted by the lighting means operated by the operating device may be achieved. Namely, decreasing the duty cycle and, thus, the on-time duration of the PWM signal while keeping the period of the PWM signal constant at a fixed value decreases the temporal average value of the electrical power transferred by the switched resonant converter and, thus, decreases the temporal average value of the electrical power output by the operating device to the lighting means.

In order to strongly reduce the electrical power transferred by the switched resonant converter, the duty cycle and, thus, the on-time duration of the switched resonant converter have to be strongly reduced respectively decreased, which can lead to limits in view of the analog-to-digital resolution of the digital circuitry of the control unit performing the PWM modulation. Furthermore, this may lead to limits in view of the resolution and/or period of the PWM signal. This leads to visible "*staircase effects*" during dimming of lighting means operated by the operating device in such a way, especially when dimming the lighting means to very low dim levels which are achieved by strongly reducing the electrical power transferred by the switched resonant converter and provided to the lighting means via the output of the operating device.

Therefore, the above described PWM modulation with a changing duty cycle/on-time duration but a fixed period of the PWM signal is disadvantageous with regard to a dimming operation.

In the light of the above, it is an object of the present invention to provide an operating device comprising a switched resonant converter that is configured to operate lighting means, in particular to perform a dimming operation of the lighting means, without the above described disadvantages.

These and other objects, which become apparent upon reading the following description, are solved by the subject-matter of the independent claim. The dependent claims refer to preferred embodiments of the invention.

According to the invention, an operating device for lighting means is provided, wherein the operating device comprises

- a switched resonant converter comprising at least two switches, and
- a control unit configured to control the switching operation of the at least two switches by modulating a high frequency operation with low frequency PWM pulses with a varying frequency.

The control unit is configured to adjust an electrical power transferred by the switched resonant converter in a power range, the power range comprising at least a first power subrange and a second power subrange adjacent to the first power subrange; wherein

- the control unit is configured to decrease the electrical power transferred in the first power subrange by increasing the off-time duration between two PWM pulses, while the on-time duration of the PWM pulses is kept constant;
- the control unit is configured to increase the electrical power transferred in the second power subrange by increasing the on-time duration of the PWM pulses, while the off-time duration between two PWM pulses is kept constant; and
- the control unit is configured to keep the on-time duration of the PWM pulses constant at a minimum on-time duration in the first power subrange, and to keep the off-time duration between two PWM pulses constant at a minimum off-time duration in the second power subrange; wherein

the minimum on-time duration equals to the minimum off-time duration.

The electrical power transferred by the switched resonant converter corresponds to the electrical power output of the switched resonant converter respectively to the electrical power provided at the output of the switched resonant converter. For describing the present invention, the term "*power*" is used as a synonym of the term "*electrical power*".

In the context of the present invention, the term "*power transferred by the switched resonant converter*" in particular refers to the temporal average value of the electrical power output by the switched resonant converter, preferably the average value of the electrical power over at least one period of the PWM modulation (period of the PWM signal comprising the PWM pulses). Further, the term "*actual electrical power*" in particular refers to the electrical power transferred at a certain time point.

In other words, the control unit is in particular configured to adjust the temporal average value of the electrical power transferred by the switched resonant converter in the power range, wherein

- the control unit is configured to decrease the temporal average value of the electrical power transferred in the first power subrange by increasing the off-time duration between two PWM pulses, while the on-time duration of the PWM pulses is kept constant; and
- the control unit is configured to increase the temporal average value of the electrical power transferred in the second power subrange by increasing the on-time duration of the PWM pulses, while the off-time duration between two PWM pulses is kept constant.

That is, the present invention proposes to perform a low frequency PWM modulation of the high frequency switching operation of the at least two switches of the switched resonant converter for adjusting respectively changing the electrical power transferred by the switched resonant converter, wherein the frequency respectively period of the PWM modulation is varied. The variation of the frequency of the PWM modulation is achieved by either increasing the off-time duration of the PWM modulation while keeping the on-time duration of the PWM modulation constant or by increasing the on-time duration of the PWM modulation while keeping the off-time duration of the PWM modulation constant.

Therefore, according to the present invention, for strongly reducing the power transferred by the switched resonant converter, the off-time duration of the PWM modulation is increased while keeping the on-time duration constant. As a result according to the present invention, the on-time duration is not strongly reduced while keeping the period of the PWM modulation constant. In contrast, according the present invention the frequency and thus period of the PWM modulation is varied. Therefore, the PWM modulation according to the present invention does not result in limitations in view of the analog-to-digital resolution of the digital circuitry and in view of the resolution and/or period of the PWM modulation.

As outlined already above, the control unit is configured to control the switching operation of the at least two switches by modulating a high frequency switching operation (also referred to as "*high frequency operation*") of the at least two switches with low frequency PWM pulses with a varying frequency. That is, the control unit is configured to perform a low frequency PWM modulation with a varying frequency of the high frequency switching operation of the at least two switches.

The varying frequency of the low frequency PWM modulation respectively of the low frequency PWM pulses may also be called *"PWM frequency"*. In other words, the control unit is configured to modulate the high frequency switching operation using a low frequency PWM signal with a varying frequency comprising PWM pulses.

The power range in particular corresponds to a dimming level range of the light emitted by the lighting means, when the lighting means are operated by the operating device starting from the power transferred by the switched resonant converter. The higher the dimming level, the more light is emitted by the lighting means and thus the greater the power transferred by the switched resonant converter must be.

The electrical power transferred in the first power subrange is smaller than the electrical power transferred in the second power subrange.

The off-time duration between two PWM pulses corresponds to the off-time duration between two adjacent PWM pulses. As described already above, the low frequency PWM pulses form a low frequency PWM signal with a varying frequency used for modulating the high frequency switching operation of the at least two switches of the switched resonant converter. The on-time duration and the off-time duration correspond to the period of the PWM signal. In particular, the period of the PWM signal corresponds to the sum of the on-time duration and the adjacent, preferably previous or next, off-time duration.

The on-time duration of the PWM pulses may also be referred to as the "*on-time duration of the PWM modulation*" and the off-time duration between two PWM pulses may also be referred to as the "*off-time duration of the PWM modulation*". Thus, the varying frequency of the PWM pulses may also be refer to as the "*varying frequency of the PWM modulation*".

In particular, during the on-time duration of the PWM pulses the high frequency operation of the at least two switches is performed, whereas during the off-time duration between two PWM pulses the high frequency operation of the at least two switches is not performed respectively is stopped.

Therefore, the switched resonant converter is configured to convert an input voltage/input current into an output voltage/output current during the on-time duration of the PWM pulses, whereas during the off-time duration between two PWM pulses the switched resonant converter does not perform such a conversion.

Preferably, the control unit is implemented as a processor, as a microprocessor, as a controller, as a microcontroller or as an application specific integrated circuit (ASIC) or as any combination of them.

Each of the at least two switches of the switched resonant converter is preferably a transistor, such as a bipolar transistor or a field effect transistor (FET), e.g. a metal-oxide-semiconductor field-effect transistor (MOSFET).

The operating device preferably comprises at least one further converter, in particular actively switched converter, wherein the at least one further converter and the switched resonant converter form an electrical supply path between the input and output of the operating device. The at least one further converter may be arranged between the input of the operating device and the switched resonant converter, i.e. on the input side of the switched resonant converter, in the electrical supply path. Alternatively, the at least one further converter may be arranged between the output of the operating device and the switched resonant converter, i.e. on the output side of the switched resonant converter, in the electrical supply path.

Preferably, the at least one further converter is configured to perform power factor correction (PFC), in particular in case the at least one further converter is arranged on the input side of the switched resonant converter. In other words the at least one further converter may be a power factor correction stage (PFC-stage).

The at least one further converter is preferably configured to convert an AC input voltage, such as mains voltage, or DC input voltage, such as a battery voltage, into a higher or lower DC output voltage, depending on the type of converter. Preferably, the control unit is configured to control the operation of the at least one further converter.

Preferably, the at least one further converter is an actively switched converter comprising at least one switch, such as a transistor, and at least one energy storage, such as an inductor respectively choke. In particular, the control unit is configured to control the switching of the at least one switch in order to control charging and discharging of the at least one energy storage, e.g. magnetization and de-magnetization of an inductor being the at least one energy storage, causing a conversion of the input voltage to a higher or lower output voltage, depending on the type of the at least one further converter.

In particular the at least one further converter may be implemented as boost converter, buck converter, flyback converter etc., which are examples of an actively switched converters. Preferably, the at least one further converter is a current source configured to output an output current, preferably a constant output current.

Furthermore, the operating device may comprise at least one rectifier, such as a half-wave rectifier or a full-wave rectifier, and/or at least one filter for smoothing voltage peaks. The at least one rectifier and/or the at least one filter may be arranged on the input side and/or the output side of the switched resonant converter.

The switched resonant converter is preferably an output converter stage (of the electrical supply path) configured to directly supply the lighting means with electrical power, when the lighting means are electrically connected to the output of the operating device.

Preferably, the switched resonant converter is a constant current source configured to output an output current controllable by the switching operation of the at least two switches of the switched resonant converter.

Preferably, the operating device, in particular the switched resonant converter, is configured to output DC power controllable by the switching operation of the at least two switches of the switched resonant converter.

The control unit is configured to keep the on-time duration of the PWM pulses constant at a minimum on-time duration in the first power subrange, and to keep the off-time duration between two PWM pulses constant at a minimum off-time duration in the second power subrange.

Preferably, the control unit is configured to set the electrical power transferred at the border between the first power subrange and the second power subrange by setting the on-time duration of the PWM pulses to the minimum on-time duration and the off-time duration between two PWM pulses to the minimum off-time duration.

The minimum on-time duration equals to the minimum off-time duration.

In this case, the electrical power transferred by the switched resonant converter at the border between the first power subrange and the second power range (when the on-time duration of the PWM pulses is set to the minimum on-time duration and the off-time duration between two PWM pulses is set to the minimum off-time duration) corresponds to the median value of the power range. That is, the electrical power transferred by the switched resonant converter corresponds to a dimming level of 50%. The higher the dimming level, the greater is the amount of light emitted by the lighting means and the lower the dimming level, the smaller is the amount of light emitted by the lighting means.

Preferably, the control unit is configured to achieve a duty cycle of 50% of the low frequency PWM pulses respectively of the low frequency PWM signal by setting the on-time duration of the PWM pulses to the minimum on-time duration and the off-time duration between two PWM pulses to the minimum off-time duration, wherein the minimum on-time duration equals to the minimum off-time duration. In doing so, the control unit is preferably configured to cause the switched resonant converter to transfer respectively output electrical power corresponding to the median value of the power range.

Moreover, the control unit is preferably configured to achieve a maximum frequency respectively minimum period of the low frequency PWM signal respectively of the low frequency PWM pulses by setting the on-time duration of the PWM pulses to the minimum on-time duration and the off-time duration between two PWM pulses to the minimum off-time duration.

Preferably, the control unit is configured to control the on-time duration of the PWM pulses and the off-time duration between two PWM pulses such that a target value of the duty cycle of the low frequency PWM modulation is achieved.

In particular, the control unit is preferably configured to achieve a target value of the electrical power transferred by the switched resonant converter by controlling the on-time duration of the PWM pulses and the off-time duration between two PWM pulses such that the target value of the duty cycle of the low frequency PWM modulation corresponding to the target value of the electrical power is achieved.

This allows the operating device to cause the lighting means to emit a target amount of light corresponding to the target value of the electrical power.

The control unit is configured to receive at least one electrical parameter of the operating device, in particular of the switched resonant converter, such as input voltage or current of the operating device, output voltage or current of the operating device, input voltage or current of the switched resonant converter, output voltage or current of the switched resonant converter etc., as a feedback value. Additionally or alternatively the control unit is configured to receive at least one physical parameter, such as the amount of light emitted by the lighting means or the intensity of light emitted by the lighting means etc. (when connected to the output of the operating device), as a feedback value .

The control unit is configured to control the switching operation of the at least two switches by modulating the high frequency operation with low frequency PWM pulses with varying frequency on the basis of at least one electrical parameter and/or at least one physical parameter as a feedback value.

Preferably, the control unit is configured to vary the frequency of the low frequency PWM modulation by varying the off-time duration between two PWM pulses in the first power subrange and varying the on-time duration of the PWM pulses in the second power subrange.

In other words, the control unit is preferably configured to vary the frequency of the low frequency PWM signal comprising PWM pulses used for modulating the high frequency switching operation of the at least two switches by varying the off-time duration of the low frequency PWM signal (off-time duration between two PWM pulses) in the first power subrange and varying the on-time duration of the PWM pulses in the second power subrange

The control unit is preferably configured to decrease the frequency of the low frequency PWM signal in the first power subrange by increasing the off-time duration between two PWM pulses, while the on-time duration of the PWM pulses is kept constant. The control unit is preferably configured to decrease the frequency of the low frequency PWM signal in the second power subrange by increasing the on-time of the PWM pulses, while the off-time duration between two PWM pulses is kept constant.

Preferably, the control unit is configured to synchronize the on-time duration of at least one PWM pulse with the switching period of the high frequency operation.

This allows a zero voltage or low-voltage switching of the at least two switches.

In particular, the control unit is configured to set the on-time duration of at least one PWM pulse to a multiple integer of the switching period of the high frequency operation.

This synchronizes the on-time duration of at least one PWM pulse with the switching period of the high frequency operation and thus allows a zero voltage or low-voltage switching of the at least two switches. The switching period of the high frequency operation corresponds to the inverse of the frequency of the high frequency operation and may also be called "*period of the high frequency operation*".

Preferably, the control unit is configured to set the off-time duration of at least one PWM pulse to a multiple integer of the ringing period of the high frequency operation.

Preferably, the control unit is configured to synchronize the falling edge of at least one PWM pulse with a valley or a peak of the high frequency operation.

In particular, the control unit is configured to synchronize the time point, at which the on-time duration of the at least one PWM-pulse is stopped, with a valley or a peak of the high frequency operation.

Preferably, the at least two switches are connected in series and a power resonant circuit of the switched resonant converter is electrically connected to the midpoint between the two switches.

In other words, the switched resonant converter comprises the at least two switches electrically connected in series and a power resonant circuit, wherein the power resonant circuit is electrically connected to the midpoint between the two switches.

Preferably, the switched resonant converter comprises two switches connected in series and a power resonant circuit electrically connected to the midpoint between the two switches. That is, the switched resonant converter preferably comprises a half-bridge (switching half-bridge) comprising two switches.

Preferably, the switched resonant converter comprises a full bridge comprising four switches. In particular, two first switches of the four switches are electrically connected in series between two input terminals of the switched resonant converter for inputting the input voltage and the two other second switches of the four switches are connected in series between the two input terminals of the switched resonant converter. The power resonant circuit, in particular the high potential terminal of the power resonant circuit, is preferably connected to the midpoint between the two first switches.

The power resonant circuit comprises or corresponds to a series resonant circuit comprising at least one capacitor and at least one inductor, or to a parallel resonant circuit comprising at least one capacitor and at least one inductor.

By switching the at least two switches of the switched resonant converter electrical power is transferred via the power resonant circuit and, thus, an input voltage of the switched resonant converter is converted to an output voltage of the switched resonant converter. Preferably, by switching the at least two switches of the switched resonant converter an input current of the switched resonant converter is converted to an output current of the switched resonant converter.

Preferably, the control unit is configured to synchronize the rising edge of at least one PWM pulse with a valley or peak of a ringing voltage present at the midpoint between the two switches during the off-time duration between the at least one PWM pulse and the preceding PWM pulse.

This allows a zero voltage or low-voltage switching of the at least two switches.

In other words, the control unit is preferably configured to synchronize the rising edge of at least one PWM pulse with a valley or peak of a ringing voltage present at the midpoint between the two switches during the off-time duration between the at least one PWM pulse and the preceding respectively previous PWM pulse adjacent to the at least one PWM pulse.

In particular, the control unit is configured to synchronize the time point, at which the off-time duration between the at least one PWM-pulse and the preceding PWM pulse is stopped, with a valley or a peak of the high frequency operation.

Preferably, the operating device comprises a first voltage detection circuit configured to detect the ringing voltage, in particular the valley and/or peak of the ringing voltage, and feedback the detection result to the control unit. The first voltage detection circuit comprises or corresponds to a voltage divider electrically connected to the midpoint between the two switches and/or an auxiliary winding coupled with the power resonant circuit, in particular with an inductor of the power resonant circuit.

Preferably, the control unit is configured to synchronize the falling edge of at least one PWM pulse with a valley or a peak of an oscillating voltage present at the midpoint between the two switches during the on-time duration of the at least one PWM pulse.

This allows a zero voltage or low-voltage switching of the at least two switches.

In particular, the control unit is configured to synchronize the time point, at which the on-time of the at least one PWM-pulse is stopped, with a valley or a peak of the oscillating voltage.

Preferably, the operating device comprises a second voltage detection circuit configured to detect the oscillating voltage, in particular the valley and/or peak of the oscillating voltage, and feedback the detection result to the control unit. The second voltage detection circuit comprises or corresponds to a voltage divider electrically connected to the midpoint between the two switches and/or an auxiliary winding coupled with the power resonant circuit, in particular with an inductor of the power resonant circuit. The above described first voltage detection circuit and the above described second voltage detection circuit may be the same detection circuit.

Preferably, the switched resonant converter is a self-resonant resonant converter comprising a free-oscillating resonant circuit configured to control the high frequency operation of the at least two switches. Alternatively, the switched resonant converter is preferably an actively switched resonant converter and the control unit is configured to control the high frequency operation of the at least two switches.

Preferably, the free-oscillating resonant circuit comprises or corresponds to a series resonant circuit comprising at least one capacitor and at least one inductor, or to a parallel resonant circuit comprising at least one capacitor and at least one inductor.

In case the switched resonant converter is a self-resonant resonant converter, the operating device preferably comprises an interruption circuit that is controllable by the control unit. The interruption circuit is configured to interrupt respectively stop the high frequency switching operation controlled by the free-oscillating resonant circuit during the off-time duration between two low frequency PWM pulses. The interruption circuit is configured to allow the high frequency switching operation controlled by the free-oscillating resonant circuit during the on-time duration of the low frequency PWM pulses.

Moreover, in case the switched resonant converter is a self-resonant resonant converter, the free-oscillating resonant circuit is preferably configured to perform the high frequency switching operation of the at least two switches with a fixed frequency. That is, the two switches are preferably switched with a fixed frequency during the high frequency switching operation.

In case the switched resonant converter is an actively switched resonant converter, the control unit is preferably configured to perform the high frequency operation of the two switches during the on-time duration of the low frequency PWM pulses and to not perform respectively stop performing the high frequency operation of the two switches during the off-time duration between two low frequency PWM pulses.

The frequency of the high frequency switching operation is greater than the varying frequency (PWM frequency) of the low frequency PWM pulses respectively of the low frequency PWM modulation.

Preferably, the frequency of the high frequency switching operation corresponds to a value between 250 kHz and 1 MHz, more preferably between 500 kHz and 10 MHz, especially more preferably between 1 MHz and 10 MHz.

In particular, the frequency of the high frequency operation is in the range of the resonant frequency of the power resonant circuit.

Preferably, the free-oscillating resonant circuit or the control unit is configured to perform the high frequency switching operation of the at least two switches with a fixed frequency. Preferably, the fixed frequency is in the range of the resonant frequency of the power resonant circuit.

Preferably, the free-oscillating resonant circuit or the control unit is configured to control the high frequency switching operation of the at least two switches with a fixed frequency such that the switched resonant converter outputs a constant voltage or current, when the high frequency switching operation is performed.

Preferably, the frequency (PWM frequency) of the low frequency PWM pulses corresponds to a value between 1 kHz and 500 kHz.

Preferably, at a dimming level of 50% the PWM frequency can be half the frequency of the high frequency switching operation. At very high and/or very low dimming levels, the PWM frequency is preferably much lower than the frequency of the high frequency switching operation.

The minimum off-time duration between two PWM pulses preferably corresponds to a value between 100 ns and 10 $\mu$s, more preferably to a value between 500 ns and 5 $\mu$s. The minimum on-time duration of the PWM pulses preferably corresponds to a value between 100 ns and 10 $\mu$s, more preferably to a value between 500 ns and 5 $\mu$s.

The lighting means preferably comprises or corresponds to one or more light emitting diodes (LED).

In order to achieve the operating device according to the present invention, some or all of the above described optional features may be combined with each other.

According to the present invention, a luminaire is also provided, wherein the luminaire comprises

- an operating device according to the present invention, as described above, and
- one or more lighting means electrically connected to the output of the operating device. The operating device is configured to supply the one or more lighting means with electrical power, in particular DC power, starting from the electrical power transferred by the switched resonant converter.

The one or more lighting means preferably comprises or corresponds to one or more light emitting diodes (LED).

The above description with regard to the operating device according to the present invention is also valid for the operating device of the luminaire according to the present invention.

Moreover, according to the present invention a method for operating one or more lighting means by an operating device according to the present invention, as described above, is provided. The method comprises

- adjusting an electrical power transferred by the switched resonant converter in a power range, the power range comprising at least a first power subrange and a second power subrange adjacent to the first power subrange; wherein
- the electrical power transferred in the first power subrange is decreased by increasing the off-time duration between two PWM pulses, while the on-time duration of the PWM pulses is kept constant;
- the electrical power transferred in the second power subrange is increased by increasing the on-time duration of the PWM pulses, while the off-time duration between two PWM pulses is kept constant; and
- the on-time duration (TON) of the PWM pulses is kept constant at a minimum on-time duration (TONMIN) in the first power subrange (PSR1), and the off-time duration (TOFF) between two PWM pulses is kept constant at a minimum off-time duration (TOFFMIN) in the second power subrange (PSR2); wherein the minimum on-time duration (TONMIN) equals to the minimum off-time duration (TOFFMIN).

The above description with regard to the operating device according to the present invention is correspondingly valid for the method according to the present invention.

In the following, the invention is described exemplarily with reference to the enclosed figures, in which

**Figure 1** is a schematic view of a preferred embodiment of an operating device according to the present invention,

**Figure 2** is a graph showing an example of a low frequency PWM modulation of a high frequency switching operation of the two switches 3a and 3b of the operating device 1 shown in Figure 1.

**Figure 3** is a graph showing a state of a low frequency PWM modulation according to a preferred embodiment of the present invention of a high frequency switching operation.

**Figure 4** is a graph showing a further state of a low frequency PWM modulation according to a preferred embodiment of the present invention of a high frequency switching operation.

**Figure 5** is a graph showing a further state of a low frequency PWM modulation according to a preferred embodiment of the present invention of a high frequency switching operation.

**Figure** 6     is a graph showing different parameters of a low frequency PWM modulation according to a preferred embodiment of the present invention of a high frequency switching operation.

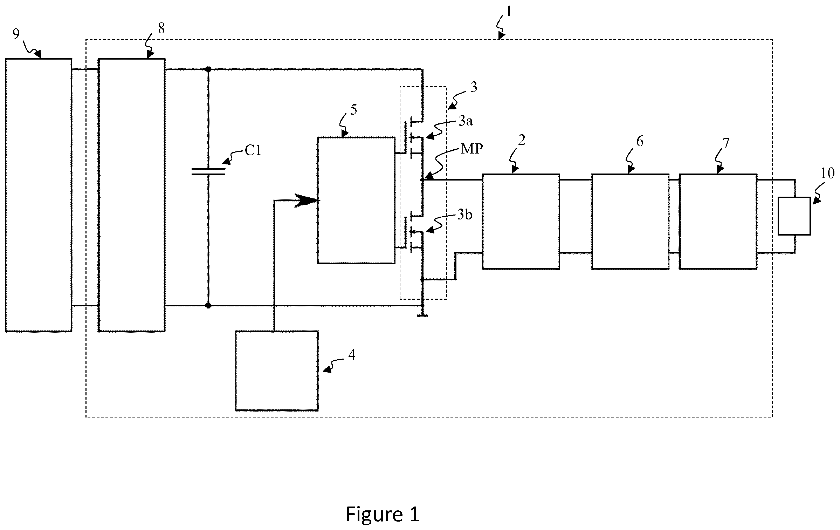

**Figure 1** is a schematic view of a preferred embodiment of an operating device according to the present invention.

The above description of the operating device according to the present invention is correspondingly valid for the operating device 1 shown in Figure 1.

The operating device 1 according to Figure 1 comprises a switched resonant converter comprising a switching circuit 3 and a power resonant circuit 2. The operating device 1 comprises further the control unit 4.

In addition, the operating device 1 comprises an optional power factor correction (PFC) circuit 8, an optional capacitor C1, an optional rectifier 6 and an optional filter 7.

The optional power factor correction circuit 8, optional capacitor C1, switching circuit 3, power resonant circuit 2, optional rectifier 6 and optional filter 7 form an electrical supply path between the input of the operating device 1 and the output of the operating device 1.

As shown in Figure 1 the input of the operating device 1 may be electrically connected to an external energy source 9, such as mains or a preferably rechargeable battery, which provides the operating device 1 with electrical energy, in particular with an input voltage (AC or DC voltage). One or more lighting means 10, such as one or more light emitting diodes (LEDs), may be electrically connected to the output of the operating device 1 in order to be directly or indirectly supplied with electrical power by the switched resonant converter.

The power factor correction circuit 8 may be a second converter, in particular a actively switched converter with at least one switch, such as a transistor, and at least one energy storage, such as an inductor. The control unit 4 may be configured to control the power factor correction circuit 8 (not shown in Figure 1). In particular, in case the power factor correction circuit 8 is an actively switched converter, the control unit 4 is configured to control the switching of the at least one switch in order to achieve a power factor correction function.

The capacitor 1 is preferably a bulk capacitor that provides an input voltage to the input of the switched resonant converter, in particular a DC input voltage.

The optional power factor correction circuit 8 and optional capacitor C1 are arranged in the electrical supply path between the input of the operating device and the input of the switched resonant converter, i.e. at the input side of the switched resonant converter. The capacitor C1 is arranged in the electrical supply path between the power factor correction circuit 8 and the switching circuit 3.

The optional rectifier 6 and the optional filter 7 are arranged in the electrical supply path between the power resonant circuit 2 and the output of the operating device 1. The rectifier 6 and filter 7 may be part of the switched resonant converter. In this case, the output of the operating device 1 would correspond to the output of the switched resonant converter and thus the switched resonant converter would be configured to directly supply the lighting means 10 with electrical power.

The switching circuit 3 comprises two switches 3a and 3b electrically connected in series. The two switches 3a and 3b connected in series form a half-bridge. The power resonant circuit is electrically connected to the midpoint between the series connection of the two switches 3a and 3b. The switching circuit 3 of the operating device 1 shown in Figure 1 may also be referred to as "*half-bridge*". As outlined already above, the switched resonant converter, in particular the switching circuit 3, may also comprise more than two switches.

As outlined already above, the power resonant circuit 2 comprises or corresponds to a series resonant circuit comprising at least one capacitor and at least one inductor, or to a parallel resonant circuit comprising at least one capacitor and at least one inductor.

The power transferred via the power resonant circuit 2 from the input of the switched resonant converter to the output of the switched resonant converter may be controlled by a switching operation of the two switches 3a and 3b of the switching circuit 3. In other words, the electrical power transferred by the switched resonant converter may be controlled by controlling a switching operation of the two switches 3a and 3b.

As described above, the control unit 4 is configured to control the switching operation of the two switches 3a and 3b by modulating a high frequency switching operation of the two switches 3a and 3b with low frequency PWM pulses with a varying frequency. The control unit 4 is configured to adjust the electrical power transferred by the switched resonant converter in a power range comprising at least a first power subrange and a second power subrange adjacent to the first power subrange. The control unit 4 is configured to decrease the electrical power transferred in the first power subrange by increasing the off-time duration between two PWM pulses, while keeping the on-time duration of the PWM pulses constant. Moreover, the control unit 4 is configured to increase the electrical power transferred in the second power subrange by increasing the on-time duration of the PWM pulses, while keeping the off-time duration between two PWM pulses constant.

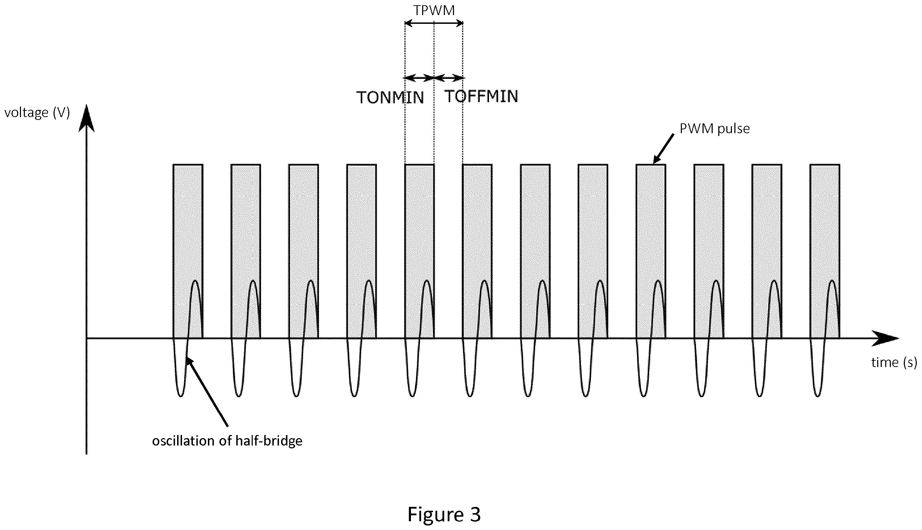

The low frequency PWM modulation of the high frequency switching operation will be exemplarily described with respect to the figures 3 to 6.

In case the switched resonant converter is a self-resonant resonant converter, the operating device 1 comprises a free-oscillating resonant circuit 5 (as shown in Figure 1) that is configured to control the high frequency switching operation of the at least two switches 3a and 3b. Preferably, the free-oscillating resonant circuit 5 is configured to control the high frequency operation of the at least two switches 3a and 3b with a fixed frequency, in particular with a fixed frequency corresponding to the resonant frequency of the power resonant circuit 2.

Preferably, the operating device 1 comprises an interruption circuit (not shown in Figure 1) controllable by the control unit 4 and configured to interrupt respectively stop the high frequency switching operation of the two switches 3a and 3b by the free-oscillating resonant circuit 5 during the off-time duration between two PWM pulses of the low frequency PWM pulses. In other words, the interruption circuit is configured to interrupt respectively stop the high frequency switching operation of the two switches 3a and 3b during the off-time duration of the PWM modulation performed by the control circuit 4. Moreover, the interruption circuit is configured to allow the high frequency switching operation of the two switches 3a and 3b by the free-oscillating resonant circuit 5 during the on-time duration of the low frequency PWM pulses.

In case the switched resonant converter is an actively switched resonant converter (not shown in Figure 1), the operating device does not comprise a free-oscillating resonant circuit and the control unit 4 is configured to control the high frequency switching operation of the two switches 3a and 3b. In addition, the control unit 4 is configured to modulate the high frequency switching operation with low frequency PWM pulses. In this case, the control unit 4 is configured to perform the high frequency switching operation of the two switches 3a and 3b during the on-time duration of the PWM pulses and to not perform respectively stop the high frequency switching operation of the two switches 3a and 3b during the off-time duration between two PWM pulses. The control unit is preferably configured to perform the high frequency switching operation with a fixed frequency, in particular with a fixed frequency corresponding to the resonant frequency of the power resonant circuit 2.

Preferably, the free-oscillating resonant circuit 5 or the control unit 4 are configured to control the high frequency switching operation of the two switches 3a and 3b such that the switched resonant converter outputs a constant voltage or constant current.

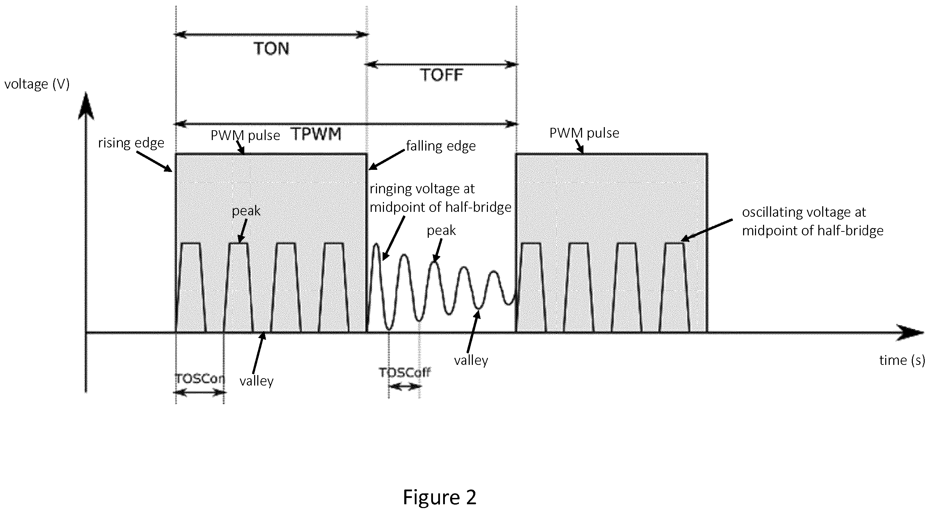

**Figure 2** is a graph showing an example of a low frequency PWM modulation of a high frequency switching operation of the two switches 3a and 3b of the operating device 1 shown in Figure 1.

As shown in Figure 2, there is an oscillating voltage present at the midpoint MP of the half-bridge 3 of the operating device 1 caused by the high frequency switching operation of the two switches 3a and 3b. The oscillating voltage has a period respectively switching period TOSCon.

According to Figure 2, the high frequency switching operation of the half-bridge 3, in particular of the two switches 3a and 3b, is modulated with low frequency PWM pulses with a varied frequency TPWM (varied PWM frequency). In other words, the high frequency switching operation is modulated with a PWM signal with a varied frequency comprising PWM pulses. During the on-time duration TON of the PWM pulses (on-time duration of the PWM signal respectively on-time duration of the PWM modulation) the high frequency switching operation is performed.

During the off-time duration TOFF between two PWM pulses (off-time duration of the PWM signal respectively off-time duration of the PWM modulation) the high frequency operation is not performed respectively is stopped. As a result a ringing voltage is present at the midpoint MP of the half-bridge 3 during the off-time duration TOFF, as shown in Figure 2. The ringing voltage has a ringing period TOSCoff.

Furthermore, as shown in Figure 2, the sum of the on-time duration TON and the off-time duration TOFF corresponds to the period TPWM of the PWM signal. The frequency of the PWM signal (frequency of the PWM modulation) is the inverse of the period TPWM. Therefore, by changing the on-time duration or the off-time duration the period TPWM and the frequency of the PWM signal may be changed.

As indicated in Figure 2, the on-time duration TON of the PWM pulses starts at the time point of the rising edge of each PWM pulse and ends at the time point of the falling edge of the corresponding PWM pulse. The off-time duration between two PWM pulses starts at the time point of the falling edge of the respective PWM pulse and ends at the time point of the rising edge of the next respectively following PWM pulse.

As already described above, the control unit 4 is configured to decrease the electrical power transferred in the first power subrange by increasing the off-time duration TOFF between two PWM pulses while keeping the on-time duration TON of the PWM pulses constant and to increase the electrical power transferred in the second power subrange by increasing the on-time duration TON of the PWM pulses while keeping the off-time duration TOFF between two PWM pulses constant (not shown in Figure 2).

The control unit 4 may be configured to synchronize the rising edge of at least one PWM pulse with a valley or peak of the ringing voltage present at the point MP between the two switches 3a and 3b (not shown in Figure 2) during the off-time duration TOFF between the at least one PWM pulse (e.g. right PWM pulse of Figure 2) and the preceding PWM pulse (e.g. left PWM pulse of Figure 2).

Further, the control unit 4 may be configured to synchronize the falling edge of at least one PWM pulse with a valley or peak of an oscillating voltage present at the midpoint MP between the two switches 3a and 3b during the on-time duration TON of the at least one PWM pulse. For example, according to Figure 2 the falling edge of the left PWM pulse is synchronized with a valley of the oscillating voltage present at the midpoint of the half-bridge 3.

**Figure 3** is a graph showing a state of a low frequency PWM modulation according to a preferred embodiment of the present invention of a high frequency switching operation. In Figure 3, the ringing of the half-bridge circuit mid-point voltage is not depicted.

According to Figure 3, the on-time duration TON of the PWM pulses is set to the minimum on-time duration TONMIN and the off-time duration TOFF between two PWM pulses is set to the minimum off-time duration TOFFMIN. Thus, the power transferred by the switched resonant converter of the operating device corresponds to a value at the border between the first power subrange and the second power subrange in the power range.

In particular, as indicated in Figure 3, the minimum on-time duration TONMIN equals to the minimum off-time duration TOFFMIN such that the power transferred corresponds to the median value of the power range. When dimming the lighting means (connected to the output of the operating device and thus directly or indirectly supplied with electrical power transferred by the switched resonant converter) in a range between 0% and 100% then Figure 3 shows the state in which the lighting means are dimmed at a dimming level of 50%.

As already described above, the higher the dimming level, the higher the amount of light emitted by the lighting means and thus the higher the electrical power output by the operating device, in particular, transferred by the switched resonant converter, must be. Therefore, a dimming level of 0% corresponds to a state in which the lighting means does not emit light. Thus, at a dimming level of 0% the operating device, in particular the switched resonant converter does not supply any electrical power to the lighting means or supplies electrical power smaller than the threshold value necessary for light emission by the lighting means. A dimming level of 100% corresponds to a state in which the lighting means emit a maximum amount of light and therefore the operating device, in particular the switched resonant converter, supplies maximum electrical power, in particular nominal electrical power.

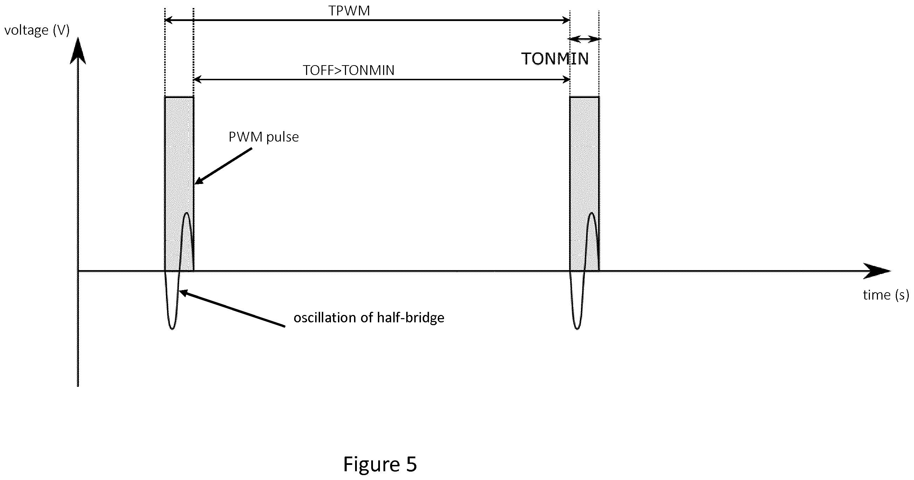

Therefore, for achieving a dimming level smaller than 50%, the control unit is configured to increase the off-time duration TOFF between two PWM pulses (starting from the off-time duration TOFF equaling to the minimum off-time duration TOFFMIN) while keeping the on-time duration TON constant at the minimum on-time duration TONMIN (such a state is shown Figure 5). This decreases the electrical power transferred by the switched resonant converter and, thus, decreases the amount of light emitted by the lighting means (dims the lighting means).

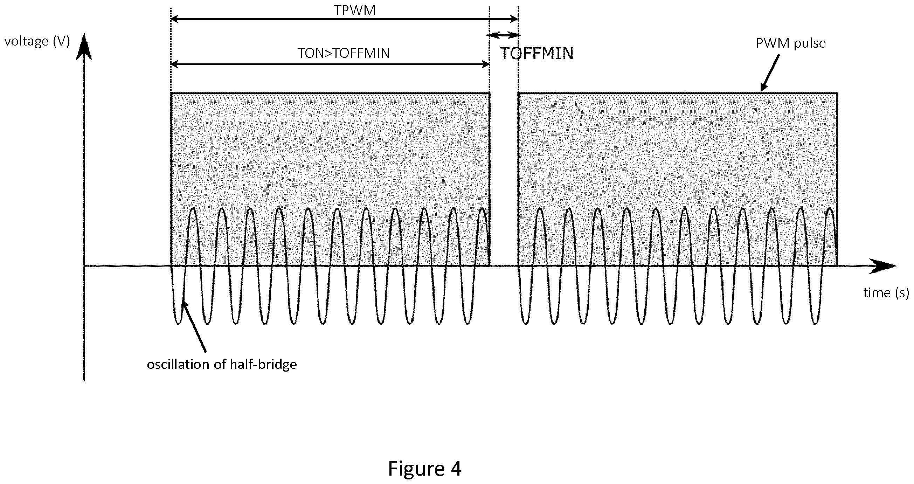

For achieving a dimming level higher than 50% the control unit is configured to increase the on-time duration TON of the PWM pulses (starting from the on-time duration TON equaling to the minimum on-time duration TONMIN) while keeping the off-time duration TOFF constant at the minimum off-time duration TOFFMIN (such a state is shown in Figure 4). This increases the electrical power transferred by the switched resonant converter and, thus, increases the amount of light emitted by the lighting means.

According to an aspect, not falling within the scope of the present invention, the minimum on-time duration TONMIN does not need to be equal to the minimum off-time duration TOFFMIN (not shown in Figure 3).

In case the minimum on-time duration TONMIN is greater than the minimum off-time duration TOFFMIN, the power transferred by the switched resonant converter at the border between the first and second power subrange (when on-time duration TON is set to the minimum on-time duration TONMIN and the off-time duration TOFF is set to the minimum off-time duration TOFFMIN) will be greater compared to the case when the minimum on-time duration TONMIN equals to the minimum off-time duration TOFFMIN.

Correspondingly, in case the minimum on-time duration TONMIN is smaller than the minimum off-time duration TOFFMIN, the power transferred by the switched resonant converter at the border between the first and second power subrange (when on-time duration TON is set to the minimum on-time duration TONMIN and the off-time duration TOFF is set to the minimum off-time duration TOFFMIN) will be smaller compared to the case when the minimum on-time duration TONMIN equals to the minimum off-time duration TOFFMIN.

As indicated in Figure 3 by the oscillation of the at least two switches of the switched resonant converter (e.g. half-bridge 3 of switched resonant converter shown in Figure 1), the high frequency switching operation of the at least two switches is performed during the on-time duration TON of the PWM pulses, whereas the high frequency switching operation is not performed respectively interrupted during the off-time duration TOFF.

Therefore, during the on-time duration TON of the PWM modulation actual electrical power is transferred by the switched resonant converter due to the high frequency switching operation, whereas during the off-time duration TOFF of the PWM modulation actual electrical power is not transferred by the switched resonant converter due to the stopped high frequency switching operation. During the period of the PWM modulation TPWM a temporal average value of electrical power is outputted by the switched resonant converter, which value determines the effective electrical power supplied to the lighting means and, thus, the amount of light emitted by the lighting means.

As already outlined above, in the context of the present invention the temporal average value of the electrical power is in particular referred to by the term *"electrical power"* and the electrical power transferred at a certain time point is in particular referred to by the term "actual *electrical power"*

**Figure 4** is a graph showing a further state of a low frequency PWM modulation according to a preferred embodiment of the present invention of a high frequency switching operation.

As shown in Figure 4, the control unit of an operating device according to the present invention is configured to increase the electrical power transferred by the switched resonant converter in the second power subrange by increasing the on-time duration TON of the PWM pulses, while keeping the off-time duration TOFF between two PWM pulses constant at the minimum off-time duration TOFFMIN.

**Figure 5** is a graph showing a further state of a low frequency PWM modulation according to a preferred embodiment of the present invention of a high frequency switching operation.

As shown in Figure 5, the control unit of an operating device according to the present invention is configured to decrease the electrical power transferred by the switched resonant converter in the first power subrange by increasing the off-time duration TOFF between two PWM pulses, while keeping the on-time duration TON of the PWM pulses constant at the minimum on-time duration TONMIN.

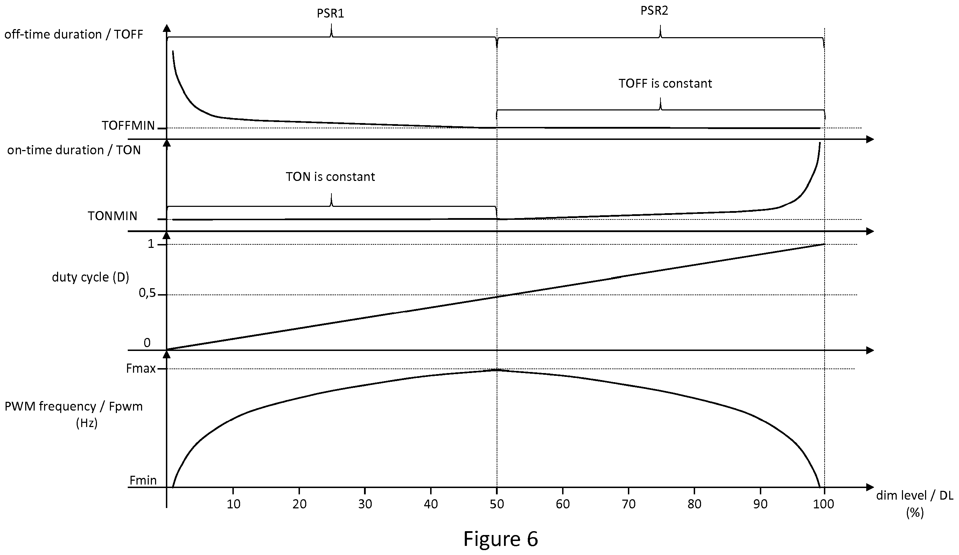

**Figure 6** is a graph showing different parameters of a low frequency PWM modulation according to a preferred embodiment of the present invention of a high frequency switching operation.

In the graph of Figure 6 it is assumed that the minimum on-time duration TONMIN equals to the minimum off-time duration TOFFMIN.

Therefore, in the state when the on-time duration TON is set to the minimum on-time duration TONMIN and the off-time duration TOFF is set to the minimum off-time duration TOFFMIN the duty cycle D of the PWM modulation respectively PWM signal comprising the PWM pulses equals to 0,5 respectively 50%. The duty cycle D is the ratio of the on-time duration TON with respect to the period TPWM of the PWM signal, wherein the period TPWM of the PWM signal is the sum of the on-time duration TON and the off-time duration TOFF.

$$D = \frac{TON}{TPWM} = \frac{TON}{TON + TOFF}$$

When the duty cycle D corresponds to 0.5 the varying frequency Fpwm (PWM frequency) of the PWM pulses (varying frequency of the PWM signal comprising the PWM pulses) has its maximum value, as shown at the bottom of Figure 6. This state corresponds to the border between the first power subrange PSR1 and the second power subrange PSR2 in the power range, at which electrical power transferred by the switched resonant converter corresponds to the median value of the power range.

As shown in Figure 6, for decreasing the duty cycle D and, thus, decreasing the electrical power transferred by the switched resonant converter the off-time duration TOFF between two PWM pulses is increased while the on-time duration TON of the PWM pulses is kept constant. Namely the greater the off-time duration TOFF (while keeping the on-time duration TON constant), the smaller is the duty cycle D. For increasing the duty cycle D and, thus, increasing the electrical power transferred by the switched resonant converter the on-time duration TON of the PWM pulses is increased while the off-time duration TOFF between two PWM pulses is kept constant. Namely the greater the on-time duration TON (while keeping the off-time duration TOFF constant), the greater is the duty cycle D.

As shown at the bottom of Figure 6, the varying frequency Fpwm of the PWM pulses is decreased either by increasing the off-time duration TOFF while keeping the on-time duration Ton constant (decreasing the electrical power transferred in the first power subrange PSR1) or by increasing the on-time duration TON while keeping the off-time duration TOFF constant (increasing the electrical power transferred in the second power subrange PSR2).

The control unit may use the following equation for determining the off-time duration TOFF in the first power subrange PSR1 in order to achieve a target duty cycle $D_t$ greater than 0 and smaller or equal to 0,5, assuming that the minimum on-time duration TONMIN equals to the minimum off-time duration TOFFMIN:

$$TOFF = \frac{1 - D_t}{D_t} \cdot TONMIN .$$

The control unit may use the following equation for determining the on-time duration TON in the second power subrange PSR2 in order to achieve a target duty cycle $D_t$ greater or equal to 0,5 and smaller than 1, assuming that the minimum on-time duration TONMIN equals to the minimum off-time duration TOFFMIN:

$$TON = \frac{D_t}{1 - D_t} \cdot TOFFMIN .$$

**Claims**

1. Operating device (1) for lighting means (10),

 - the operating device (1) comprises

 - a switched resonant converter comprising at least two switches (3a, 3b), and
 - a control unit (4) configured to control the switching operation of the at least two switches (3a, 3b) by modulating a high frequency operation with low frequency PWM pulses with a varying frequency (Fpwm); wherein

- the control unit (4) is configured to adjust an electrical power transferred by the switched resonant converter in a power range, the power range comprising at least a first power subrange (PSR1) and a second power subrange (PSR2) adjacent to the first power subrange (PSR1); wherein

- the control unit is configured to decrease the electrical power transferred in the first power subrange (PSR1) by increasing the off-time duration (TOFF) between two PWM pulses, while the on-time duration (TON) of the PWM pulses is kept constant;

- the control unit (4) is configured to increase the electrical power transferred in the second power subrange (PSR2) by increasing the on-time duration (TON) of the PWM pulses, while the off-time duration (TOFF) between two PWM pulses is kept constant; and

- the control unit (4) is configured to keep the on-time duration (TON) of the PWM pulses constant at a minimum on-time duration (TONMIN) in the first power subrange (PSR1), and to keep the off-time duration (TOFF) between two PWM pulses constant at a minimum off-time duration (TOFFMIN) in the second power subrange (PSR2); wherein the minimum on-time duration (TONMIN) equals to the minimum off-time duration (TOFFMIN).

2. Operating device (1) according to claim 1, wherein

- the control unit (4) is configured to set the electrical power transferred at the border between the first power subrange (PSR1) and the second power subrange (PSR2) by setting the on-time duration (TON) of the PWM pulses to the minimum on-time duration (TONMIN) and the off-time duration (TOFF) between two PWM pulses to the minimum off-time duration (TOFFMIN).

3. Operating device (1) according to any one of the preceding claims, wherein

- the control unit (4) is configured to control the on-time duration (TON) of the PWM pulses and the off-time duration (TOFF) between two PWM pulses such that a target value of the duty cycle of the low frequency PWM modulation is achieved.

4. Operating device (1) according to any one of the preceding claims, wherein

- the control unit (4) is configured to vary the frequency (Fpwm) of the low frequency PWM modulation by varying the off-time duration

(TOFF) between two PWM pulses in the first power subrange and varying the on-time duration (TON) of the PWM pulses in the second power subrange.

5. Operating device (1) according to any one of the preceding claims, wherein

- the control unit (4) is configured to synchronize the on-time duration (TON) of at least one PWM pulse with the switching period (TOSCon) of the high frequency operation.

6. Operating device (1) according to any one of the preceding claims, wherein

- the control unit (4) is configured to set the off-time duration (TOFF) of at least one PWM pulse to a multiple integer of the ringing period (TOSCoff) of the high frequency operation.

7. Operating device (1) according to any one of the preceding claims, wherein

- the control unit (4) is configured to synchronize the falling edge of at least one PWM pulse with a valley or a peak of the high frequency operation.

8. Operating device (1) according to any one of the preceding claims, wherein

- the at least two switches (3a, 3b) are connected in series and a power resonant circuit (2) of the switched resonant converter is electrically connected to the midpoint (MP) between the two switches (3a, 3b).

9. Operating device (1) according to claim 8, wherein

- the control unit (4) is configured to synchronize the rising edge of at least one PWM pulse with a valley or peak of a ringing voltage present at the midpoint (MP) between the two switches (3a, 3b) during the off-time duration (TOFF) between the at least one PWM pulse and the preceding PWM pulse.

10. Operating device (1) according to claim 8 or 9, wherein

- the control unit (4) is configured to synchronize the falling edge of at least one PWM pulse with a valley or a peak of an oscillating voltage present at the midpoint (MP) between the two switches (3a, 3b) during the on-time duration (TON) of the at least one PWM pulse.

11. Operating device (1) according to any one of the preceding claims, wherein

- the switched resonant converter is a self-resonant resonant converter comprising a free-oscillating resonant circuit (5) configured to control the high frequency operation of the at least two switches (3a, 3b); or
- the switched resonant converter is an actively switched resonant converter and the control unit (4) is configured to control the high frequency operation of the at least two switches (3a, 3b).

**12.** Luminaire, comprising

- an operating device (1) according to any one of the preceding claims, and
- one or more lighting means (10) electrically connected to the output of the operating device (1);
- wherein the operating device (1) is configured to supply the one or more lighting means (10) with electrical power, in particular DC power, starting from the electrical power transferred by the switched resonant converter.

**13.** Method for operating one or more lighting means by an operating device according to any one of the claims 1 to 11, comprising:

- adjusting an electrical power transferred by the switched resonant converter in a power range, the power range comprising at least a first power subrange (PSR1) and a second power subrange (PSR2) adjacent to the first power subrange (PSR1); wherein
- the electrical power transferred in the first power subrange (PSR1) is decreased by increasing the off-time duration (TOFF) between two PWM pulses, while the on-time duration (TON) of the PWM pulses is kept constant;
- the electrical power transferred in the second power subrange (PSR2) is increased by increasing the on-time duration (TON) of the PWM pulses, while the off-time duration (TOFF) between two PWM pulses is kept constant; and
- the on-time duration (TON) of the PWM pulses is kept constant at a minimum on-time duration (TONMIN) in the first power subrange (PSR1), and the off-time duration (TOFF) between two PWM pulses is kept constant at a minimum off-time duration (TOFFMIN) in the second power subrange (PSR2); wherein the minimum on-time duration (TONMIN) equals to the minimum off-time duration (TOFFMIN).

**Patentansprüche**

**1.** Betriebsvorrichtung (1) für Leuchtmittel (10),

- wobei die Betriebsvorrichtung (1) umfasst
- einen geschalteten Resonanzwandler, umfassend mindestens zwei Schalter (3a, 3b), und
- eine Steuereinheit (4), die konfiguriert ist, um den Schaltbetrieb der mindestens zwei Schalter (3a, 3b) durch Modulieren eines Hochfrequenzbetriebs mit Niederfrequenz-PWM-Impulsen mit einer variierenden Frequenz (Fpwm) zu steuern; wobei
- die Steuereinheit (4) konfiguriert ist, um eine elektrische Leistung, die durch den geschalteten Resonanzwandler übertragen wird, in einem Leistungsbereich einzustellen, der Leistungsbereich umfassend mindestens einen ersten Leistungsteilbereich (PSR1) und einen zweiten Leistungsteilbereich (PSR2), der an den ersten Leistungsteilbereich (PSR1) angrenzt; wobei
- die Steuereinheit konfiguriert ist, um die elektrische Leistung, die in dem ersten Leistungsteilbereich (PSR1) übertragen wird, durch Erhöhen der Ausschaltdauer (TOFF) zwischen zwei PWM-Impulsen zu verringern, während die Einschaltdauer (TON) der PWM-Impulse konstant gehalten wird;
- die Steuereinheit (4) konfiguriert ist, um die elektrische Leistung, die in dem zweiten Leistungsteilbereich (PSR2) übertragen wird, durch Erhöhen der Einschaltdauer (TON) der PWM-Impulse zu erhöhen, während die Ausschaltdauer (TOFF) zwischen zwei PWM-Impulsen konstant gehalten wird; und
- die Steuereinheit (4) konfiguriert ist, um die Einschaltdauer (TON) der PWM-Impulse konstant auf einer Mindesteinschaltdauer (TONMIN) in dem ersten Leistungsteilbereich (PSR1) zu halten, und um die Ausschaltdauer (TOFF) zwischen zwei PWM-Impulsen konstant auf einer Mindestausschaltdauer (TOFFMIN) in dem zweiten Leistungsteilbereich (PSR2) zu halten; wobei die Mindesteinschaltdauer (TONMIN) gleich der Mindestausschaltdauer (TOFFMIN) ist.

**2.** Betriebsvorrichtung (1) nach Anspruch 1, wobei

- die Steuereinheit (4) konfiguriert ist, um die elektrische Leistung, die an der Grenze zwischen dem ersten Leistungsteilbereich (PSR1) und dem zweiten Leistungsteilbereich (PSR2) übertragen wird, durch Einstellen der Einschaltdauer (TON) der PWM-Impulse auf die Mindesteinschaltdauer (TONMIN) und der Ausschaltdauer (TOFF) zwischen zwei PWM-Impulsen auf die Mindestausschaltdauer (TOFFMIN) einzustellen.

3. Betriebsvorrichtung (1) nach einem der vorstehenden Ansprüche, wobei

- die Steuereinheit (4) konfiguriert ist, um die Einschaltdauer (TON) der PWM-Impulse und die Ausschaltdauer (TOFF) zwischen zwei PWM-Impulsen derart zu steuern, dass ein Zielwert des Tastgrads der Niederfrequenz-PWM-Modulation erreicht wird.

4. Betriebsvorrichtung (1) nach einem der vorstehenden Ansprüche, wobei

- die Steuereinheit (4) konfiguriert ist, um die Frequenz (Fpwm) der Niederfrequenz-PWM-Modulation durch Variieren der Ausschaltdauer (TOFF) zwischen zwei PWM-Impulsen in dem ersten Leistungsteilbereich und Variieren der Einschaltdauer (TON) der PWM-Impulse in dem zweiten Leistungsteilbereich zu variieren.

5. Betriebsvorrichtung (1) nach einem der vorstehenden Ansprüche, wobei

- die Steuereinheit (4) konfiguriert ist, um die Einschaltdauer (TON) mindestens eines PWM-Impulses mit der Schaltperiode (TOSCon) des Hochfrequenzbetriebs zu synchronisieren.

6. Betriebsvorrichtung (1) nach einem der vorstehenden Ansprüche, wobei

- die Steuereinheit (4) konfiguriert ist, um die Ausschaltdauer (TOFF) mindestens eines PWM-Impulses auf ein ganzzahliges Vielfaches der Nachschwingperiode (TOSCoff) des Hochfrequenzbetriebs einzustellen.

7. Betriebsvorrichtung (1) nach einem der vorstehenden Ansprüche, wobei

- die Steuereinheit (4) konfiguriert ist, um die fallende Flanke mindestens eines PWM-Impulses mit einem Tal oder einer Spitze des Hochfrequenzbetriebs zu synchronisieren.

8. Betriebsvorrichtung (1) nach einem der vorstehenden Ansprüche, wobei

- die mindestens zwei Schalter (3a, 3b) in Reihenschaltung verbunden sind und ein Leistungsresonanzkreis (2) des geschalteten Resonanzwandlers mit dem Mittelpunkt (MP) zwischen den zwei Schaltern (3a, 3b) elektrisch verbunden ist.

9. Betriebsvorrichtung (1) nach Anspruch 8, wobei

- die Steuereinheit (4) konfiguriert ist, um die steigende Flanke mindestens eines PWM-Impulses mit einem Tal oder einer Spitze einer Nachschwingspannung zu synchronisieren, die an dem Mittelpunkt (MP) zwischen den zwei Schaltern (3a, 3b) während der Ausschaltdauer (TOFF) zwischen dem mindestens einen PWM-Impuls und dem vorhergehenden PWM-Impuls vorhanden ist.

10. Betriebsvorrichtung (1) nach Anspruch 8 oder 9, wobei

- die Steuereinheit (4) konfiguriert ist, um die fallende Flanke mindestens eines PWM-Impulses mit einem Tal oder einer Spitze einer oszillierenden Spannung zu synchronisieren, die an dem Mittelpunkt (MP) zwischen den zwei Schaltern (3a, 3b) während der Einschaltdauer (TON) des mindestens einen PWM-Impulses vorhanden ist.

11. Betriebsvorrichtung (1) nach einem der vorstehenden Ansprüche, wobei

- der geschaltete Resonanzwandler ein selbstresonanter Resonanzwandler ist, umfassend einen frei oszillierenden Resonanzkreis (5), der konfiguriert ist, um den Hochfrequenzbetrieb der mindestens zwei Schalter (3a, 3b) zu steuern; oder
- der geschaltete Resonanzwandler ein aktiv geschalteter Resonanzwandler ist und die Steuereinheit (4) konfiguriert ist, um den Hochfrequenzbetrieb der mindestens zwei Schalter (3a, 3b) zu steuern.

12. Leuchte, umfassend

- eine Betriebsvorrichtung (1) nach einem der vorstehenden Ansprüche, und
- ein oder mehrere Leuchtmittel (10), die mit dem Ausgang der Betriebsvorrichtung (1) elektrisch verbunden sind;
- wobei die Betriebsvorrichtung (1) konfiguriert ist, um das eine oder die mehreren Leuchtmittel (10) mit elektrischer Leistung, insbesondere Gleichstromleistung, ausgehend von der elektrischen Leistung, die durch den geschalteten Resonanzwandler übertragen wird, zu versorgen.

13. Verfahren zum Betreiben eines oder mehrerer Leuchtmittel mittels einer Betriebsvorrichtung nach einem der Ansprüche 1 bis 11, umfassend:

- Einstellen einer elektrischen Leistung, die durch den geschalteten Resonanzwandler übertragen wird, in einem Leistungsbereich, der Leistungsbereich umfassend mindestens einen ersten Leistungsteilbereich (PSR1) und einen zweiten Leistungsteilbereich (PSR2), der an den ersten Leistungsteilbereich (PSR1) angrenzt; wobei

- die elektrische Leistung, die in dem ersten Leistungsteilbereich (PSR1) übertragen wird, durch Erhöhen der Ausschaltdauer (TOFF) zwischen zwei PWM-Impulsen verringert wird, während die Einschaltdauer (TON) der PWM-Impulse konstant gehalten wird;

- die elektrische Leistung, die in dem zweiten Leistungsteilbereich (PSR2) übertragen wird, durch Erhöhen der Einschaltdauer (TON) der PWM-Impulse erhöht wird, während die Ausschaltdauer (TOFF) zwischen zwei PWM-Impulsen konstant gehalten wird; und

- die Einschaltdauer (TON) der PWM-Impulse konstant auf einer Mindesteinschaltdauer (TONMIN) in dem ersten Leistungsteilbereich (PSR1) gehalten wird, und die Ausschaltdauer (TOFF) zwischen zwei PWM-Impulsen konstant auf einer Mindestausschaltdauer (TOFFMIN) in dem zweiten Leistungsteilbereich (PSR2) gehalten wird; wobei

die Mindesteinschaltdauer (TONMIN) gleich der Mindestausschaltdauer (TOFFMIN) ist.

## Revendications

1. Dispositif d'actionnement (1) pour moyens d'éclairage (10),

- le dispositif d'actionnement (1) comprend
- un convertisseur résonant commuté comprenant au moins deux commutateurs (3a, 3b), et
- une unité de commande (4) configurée pour commander l'opération de commutation des au moins deux commutateurs (3a, 3b) en modulant un fonctionnement haute fréquence avec des impulsions PWM basse fréquence avec une fréquence variable (Fpwm) ; dans lequel
- l'unité de commande (4) est configurée pour ajuster une puissance électrique transférée par le convertisseur résonant commuté dans une gamme de puissance, la gamme de puissance comprenant au moins une première sous-gamme de puissance (PSR1) et une seconde sous-gamme de puissance (PSR2) adjacente à la première puissance sous-gamme (PSR1) ; dans lequel
- l'unité de commande est configurée pour diminuer la puissance électrique transférée dans la première sous-gamme de puissance (PSR1) en augmentant la durée de désactivation (TOFF) entre deux impulsions PWM, tandis que la durée d'activation (TON) des impulsions PWM est maintenue constante ;
- l'unité de commande (4) est configurée pour augmenter la puissance électrique transférée dans la seconde sous-gamme de puissance (PSR2) en augmentant la durée d'activation (TON) des impulsions PWM, tandis que la durée de désactivation (TOFF) entre deux impulsions PWM est maintenue constante ; et
- l'unité de commande (4) est configurée pour maintenir la durée d'activation (TON) des impulsions PWM constante à une durée d'activation minimale (TONMIN) dans la première sous-gamme de puissance (PSR1), et pour maintenir la durée de désactivation (TOFF) entre deux impulsions PWM constante à une durée de désactivation minimale (TOFFMIN) dans la seconde sous-gamme de puissance (PSR2) ; dans lequel la durée d'activation minimale (TONMIN) est égale à la durée de désactivation minimale (TOFFMIN).

2. Dispositif d'actionnement (1) selon la revendication 1, dans lequel

- l'unité de commande (4) est configurée pour régler la puissance électrique transférée à la frontière entre la première sous-gamme de puissance (PSR1) et la seconde sous-gamme de puissance (PSR2) en réglant la durée d'activation (TON) des impulsions PWM sur la durée d'activation minimale (TONMIN) et la durée de désactivation (TOFF) entre deux impulsions PWM sur la durée de désactivation minimale (TOFFMIN).

3. Dispositif d'actionnement (1) selon l'une quelconque des revendications précédentes, dans lequel

- l'unité de commande (4) est configurée pour commande la durée d'activation (TON) des impulsions PWM et la durée de désactivation (TOFF) entre deux impulsions PWM de telle sorte qu'une valeur cible du rapport cyclique de la modulation PWM basse fréquence soit atteinte.

4. Dispositif d'actionnement (1) selon l'une quelconque des revendications précédentes, dans lequel

- l'unité de commande (4) est configurée pour faire varier la fréquence (Fpwm) de la modulation PWM basse fréquence en faisant varier la durée de désactivation (TOFF) entre deux impulsions PWM dans la première sous-gamme de puissance et en faisant varier la durée d'activation (TON) des impulsions PWM dans la seconde sous-gamme de puissance.

5. Dispositif d'actionnement (1) selon l'une quelconque des revendications précédentes, dans lequel

   - l'unité de commande (4) est configurée pour synchroniser la durée d'activation (TON) d'au moins une impulsion PWM avec la période de commutation (TOSCon) du fonctionnement haute fréquence.

6. Dispositif d'actionnement (1) selon l'une quelconque des revendications précédentes, dans lequel

   - l'unité de commande (4) est configurée pour régler la durée de désactivation (TOFF) d'au moins une impulsion PWM sur un nombre entier multiple de la période d'oscillation (TOSCoff) du fonctionnement haute fréquence.

7. Dispositif d'actionnement (1) selon l'une quelconque des revendications précédentes, dans lequel

   - l'unité de commande (4) est configurée pour synchroniser le front descendant d'au moins une impulsion PWM avec un creux ou un pic du fonctionnement haute fréquence.

8. Dispositif d'actionnement (1) selon l'une quelconque des revendications précédentes, dans lequel

   - les au moins deux commutateurs (3a, 3b) sont connectés en série et un circuit résonant de puissance (2) du convertisseur résonant commuté est relié électriquement au point médian (MP) entre les deux commutateurs (3a, 3b).

9. Dispositif d'actionnement (1) selon la revendication 8, dans lequel

   - l'unité de commande (4) est configurée pour synchroniser le front montant d'au moins une impulsion PWM avec un creux ou un pic d'une tension d'oscillation présente au point médian (MP) entre les deux commutateurs (3a, 3b) pendant la durée de désactivation (TOFF) entre l'au moins une impulsion PWM et l'impulsion PWM précédente.

10. Dispositif d'actionnement (1) selon la revendication 8 ou 9, dans lequel

   - l'unité de commande (4) est configurée pour synchroniser le front descendant d'au moins une impulsion PWM avec un creux ou un pic d'une tension oscillante présente au point médian (MP) entre les deux commutateurs (3a, 3b) pendant la durée d'activation (TON) de l'au moins une impulsion PWM.

11. Dispositif d'actionnement (1) selon l'une quelconque des revendications précédentes, dans lequel

   - le convertisseur résonant commuté est un convertisseur résonant auto-résonant comprenant un circuit résonant à oscillation libre (5) configuré pour commander le fonctionnement haute fréquence des au moins deux commutateurs (3a, 3b) ; ou
   - le convertisseur résonant commuté est un convertisseur résonant à commutation active et l'unité de commande (4) est configurée pour commander le fonctionnement haute fréquence des au moins deux commutateurs (3a, 3b).

12. Luminaire, comprenant

   - un dispositif d'actionnement (1) selon l'une quelconque des revendications précédentes, et
   - un ou plusieurs moyens d'éclairage (10) reliés électriquement à la sortie du dispositif d'actionnement (1) ;
   - dans lequel le dispositif d'actionnement (1) est configuré pour fournir au ou aux moyens d'éclairage (10) une puissance électrique, en particulier une puissance en courant continu, à partir de la puissance électrique transférée par le convertisseur résonant commuté.

13. Procédé permettant d'actionner un ou plusieurs moyens d'éclairage par un dispositif d'actionnement selon l'une quelconque des revendications 1 à 11, comprenant :

   - l'ajustement d'une puissance électrique transférée par le convertisseur résonant commuté dans une gamme de puissance, la gamme de puissance comprenant au moins une première sous-gamme de puissance (PSR1) et une seconde sous-gamme de puissance (PSR2) adjacente à la première puissance sous-gamme (PSR1) ; dans lequel
   - la puissance électrique transférée dans la première sous-gamme de puissance (PSR1) est diminuée en augmentant la durée de désactivation (TOFF) entre deux impulsions PWM, tandis que la durée d'activation (TON) des impulsions PWM est maintenue constante ;
   - la puissance électrique transférée dans la seconde sous-gamme de puissance (PSR2) est augmentée en augmentant la durée d'activation (TON) des impulsions PWM, tandis que la durée de désactivation (TOFF) entre deux impulsions PWM est maintenue constante ; et
   - la durée d'activation (TON) des impulsions PWM est maintenue constante à une durée d'activation minimale (TONMIN) dans la première sous-gamme de puissance (PSR1), et la durée de désactivation (TOFF) entre deux impulsions PWM est maintenue constante à une durée de désactivation minimale (TOFFMIN) dans la seconde sous-gamme de puissance (PSR2) ; dans lequel

la durée d'activation minimale (TONMIN) est égale à la durée de désactivation minimale (TOFFMIN).

Figure 1

Figure 2

Figure 3

Figure 4

Figure 5

Figure 6

EP 3 829 044 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3513627 A